# EUROPÄISCHE PATENTANMELDUNG

(11) **EP 1 239 420 A1**
(43) Veröffentlichungstag der Anmeldung: **11.09.2002**
(21) Anmeldenummer: 01105504.3
(22) Anmeldetag: 05.03.2001
(51) Int. Cl.: G07C 9/00, E05B 49/00, B60R 25/00, B60R 25/04

(54) **Identifikationssystem und Codegeber zum Nachweis einer Berechtigung für den Zugang zu einem Objekt oder die Benutzung eines Objekts, insbesondere eines Kraftfahrzeugs**

(71) Anmelder: SIEMENS AKTIENGESELLSCHAFT, 80333 München (DE)
(72) Erfinder: Ott, Albert, Prof., 65207 Wiesbaden-Auringen (DE)

(57) **Zusammenfassung**

Bei dem Identifikationssystem wird ein separates Feld im Objekt erzeugt, in das ein Benutzer (5) zumindest teilweise gelangen sollte. Dann wird ein Feld auf den Benutzer (5) und ein Sekundärfeld in dessen Umgebung kapazitiv gekoppelt. Ein Codegeber (3), der vom Benutzer (5) getragen wird, erkennt das Sekundärfeld und sendet nur dann sein Codesignal aus, durch das dann eine Berechtigung nachgewiesen wird.

## Beschreibung

Die Erfindung betrifft ein Identifikationssystem und einen Codegeber zum Nachweis einer Berechtigung für den Zugang zu einem Objekt oder die Benutzung eines Objekts, insbesondere eines Kraftfahrzeugs.

Funkbasierte Identifikationssysteme, auch RF-ID "radio frequency identification" Systeme genannt, finden, z.B. als Ersatz für mechanische Schlüsselsysteme, beim Zugangsschutz für Rechner oder etwa bei automatischen Zahlungssystemen zunehmenden Einsatz. Ein RF-ID-System besteht aus einer elektronischen Identifikationsmarke (im folgenden als Codegeber bezeichnet), die auch elektronischer Schlüssel, RF-ID-Tag, ID-Geber oder ID-Karte genannt wird, die der Benutzer bei sich trägt oder die an einem zu identifizierenden Objekt angeordnet ist. Der Codegeber ist mit einem charakteristischen Code (Codeinformation) ausgestattet. Dieser Code wird üblicherweise über eine Basisstation (im folgenden als Sende- und Empfangseinheit bezeichnet) abgefragt und anschließend authentifiziert oder verifiziert. Der Code kann auch durch andere Auslösemechanismen ausgelöst vom Codegeber zum Objekt gesendet werden.

Verschiedene funkbasierte Übertragungstechnologien sind möglich oder üblich: LF-Systeme im Frequenzbereich von 100-300 kHz, RF-Systeme bei 433 MHz oder 867 MHz und hochfrequente Mikrowellensysteme, die zumeist bei den Frequenzen 2,4 GHz, 5,8 GHz, 9,5 GHz oder 24 GHz arbeiten.

Man unterscheidet bei Codegebern zwischen einer aktiven und passiven Identifikation. Die passive Identifikation zeichnet sich dadurch aus, dass der Codegeber ständig, ohne Zutun des Benutzers von der Sende- und Empfangseinheit abgefragt werden kann. Befindet sich der Codegeber innerhalb eines gewissen Entfernungsbereiches zur Sende- und Empfangseinheit, so erfolgt die Kommunikation zwischen Sende- und Empfangseinheit und Codegeber automatisch oder z.B. ausgelöst durch manuelle Betätigung einer Schalteinrichtung, wie z.B. durch Betätigen einer Türklinke durch den Benutzer. Die Beschränkung des Entfernungsbereiches ergibt sich im allgemeinen aus der Funkfelddämpfung. Das Aussenden des Abfragesignals und des daraufhin ausgelösten Antwortsignal wird auch als Frage-Antwort-Dialog bezeichnet.

Bei einem aktiven Identifikationssystem hingegen wird die Kommunikation aktiv vom Benutzer am Codegeber ausgelöst. Der Benutzer muss hierbei also üblicherweise zum einen den Codegeber manuell bedienen und dann z.B. zusätzlich die Türklinke betätigen, um die Tür zu öffnen. Aus Gründen eines erhöhten Komforts finden daher passive Identifikationssysteme vermehrt Anwendung.

Nachteilig ist bei solchen Identifikationssystemen, dass der Übertragungskanal unbemerkt und zu einem im Prinzip beliebigen Zeitpunkt abgehört werden kann. Durch eine geeignete Einrichtung ist es einem Angreifer daher normalerweise möglich, sich den Code unbefugt zugänglich zu machen und damit die eigentlich angestrebte Schutzfunktion zu überwinden.

Bei einem bekannten Identifikationssystem (DE 198 36 957 C1) wird versucht, die Sicherheit gegen unbefugte Benutzung oder unbefugten Zugang infolge von Abhörens des Frage-Antwort-Dialogs zu erhöhen. Dabei wird von der Basisstation ein erstes Abfragesignal ausgesendet, dessen Empfangsleistung auf dem Codegeber gemessen wird. Anschließend wird ein zweites Abfragesignal unter veränderten Sendebedingungen ausgesendet, dessen Empfangsleistung ebenfalls auf dem Codegeber gemessen wird. Erst wenn die Empfangsleistungen unterschiedlich sind, wird die in dem Antwortsignal enthaltene Codeinformation ausgewertet.

Bei diesem Identifikationssystem müssen immer zumindest zwei Frage-Antwort-Dialoge stattfinden, bevor der Zugang oder die Benutzung freigegeben wird. Auch wenn dadurch die Sicherheit gegen unbefugte Benutzung oder unbefugten Zugang erhöht wird, so geht der mehrfache Dialog auf Kosten eines möglichst schnellen Zugangs. Denn der Benutzer soll durch den ablaufenden Frage-Antwort-Dialog nicht in seiner üblichen Vorgehensweise beeinträchtigt werden.

Aufgabe der Erfindung ist es, ein Identifikationssystem und einen dazu passenden Codegeber zu schaffen, durch die eine verbesserte Sicherheit gegen unbefugte Benutzung öder unbefugten Zugang geschaffen wird.

Diese Aufgabe wird erfindungsgemäß durch ein Identifikationssystem nach den Merkmalen der Patentansprüche 1 und 9 sowie durch einen Codegeber mit den Merkmalen von Patentanspruch 5 gelöst. Bei dem Identifikationssystem wird eine Frage-Antwort-Dialog zwischen Objekt und Codegeber durchgeführt, durch den Codeinformationen ausgetauscht und verifiziert werden. Damit nur ein Codegeber in Nähe des Objekts einen Nachweis zur Berechtigung für den Zugang zu dem Objekt oder der Benutzung des Objekts erhalten kann, muss ein Codegeber ein objektseitig, separat erzeugtes elektromagnetisches Feld erkennen. Dies ist nur dann der Fall, wenn sich der Benutzer mit dem Codegeber in der Nähe des Objekts befindet. Nur dann dient das berechtigte Codesignal als Nachweis einer für den berechtigten Zugang oder die berechtigte Benutzung des Objekts.

Der Codegeber weist flächig ausgebildete Elektroden einer Feldmesseinrichtung auf. Die Elektroden sind dabei derart ausgebildet, dass sie die Feldmesseinrichtung weitgehend umschließen.

Vorteilhafte Ausgestaltungen der Erfindung sind durch die Unteransprüche wiedergegeben.

Ausführungsbeispiele der Erfindung werden im folgenden anhand der schematischen Zeichnungen näher erläutert. Es zeigen:

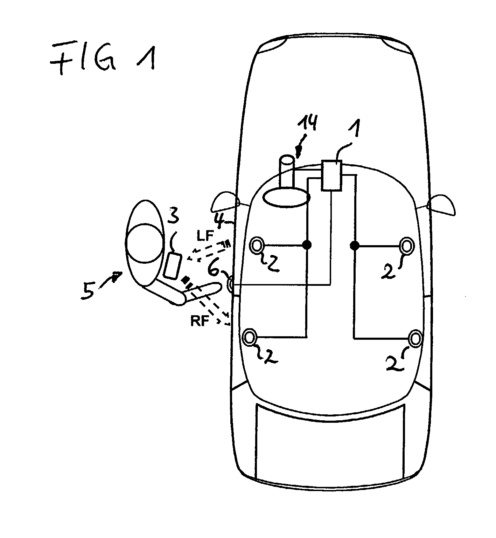

- Figur 1: ein erfindungsgemäßes Identifikationssystem, das in einem Kraftfahrzeug angeordnet ist,
- Figur 2: ein vereinfachtes Ersatzschaltbild des Identifikationssystems gemäß Figur 1,
- Figuren 3A und 3B: ausführlichere Ersatzschaltbilder und
- Figuren 4A und 4B: Ausführungsbeispiele für einen Codegeber.

Im folgenden wird ein Identifikationssystem zum Nachweis einer Berechtigung für den Zugang zu einem Objekt oder die Benutzung eines Objekts am Beispiel eines Kraftfahrzeugs als Objekt näher erläutert. Das Identifikationssystem kann selbstverständlich auch bei anderen Objekten eingesetzt werden, bei denen ein Zugang nur nach Nachweis einer Berechtigung möglich ist, wie beispielsweise bei einem Computer, einem Telefon, einem Geldautomaten, einem Gebäude, Garagen oder sonstigen zunächst versperrten Bereichen.

Das Identifikationssystem weist eine Basisstation 1 mit einer Sende- und Empfangseinheit auf. Diese Sende- und Empfangseinheit ist mit Antennen 2 verbunden, über die Signale gesendet und empfangen werden können. Die Antennen 2 sind an exponierten Stellen im Kraftfahrzeug angeordnet, so dass Signale in den Innenraum des Kraftfahrzeugs und in den näheren Umgebungsbereich des Kraftfahrzeugs mit ausreichender Stärke gesendet werden können und Signale von dort hinreichend gut empfangen werden können.

In dem Kraftfahrzeug sind nicht dargestellte Sicherheitsaggregate (wie Türschlösser für den Zugang zum Kraftfahrzeug oder ein Zünd-/Lenkschloss für eine Wegfahrsperre) für die Benutzung des Kraftfahrzeugs angeordnet, die nur bei Nachweis einer Berechtigung mit Hilfe eines codierten Freigabesignals in einem ver- oder entriegelten Zustand gesteuert werden.

Des Weiteren weist das Identifikationssystem einen mobilen, tragbaren Codegeber 3 auf, der seinerseits einen nicht dargestellten Sender und einen Empfänger aufweist. Der Codegeber 3 kann Signale empfangen und Signale aussenden. Üblicherweise wird er dazu verwendet, ein codiertes Antwortsignal auszusenden, mit dessen Codeinformation eine Berechtigung zum Zugang oder Benutzung des Objekts nachgewiesen wird.

Bei dem vorliegenden Identifikationssystem wird nur dann eine Berechtigung nachgewiesen, wenn die Basisstation 1 das korrekt codierte Antwortsignal und die daraus demodulierte Codeinformation empfängt.

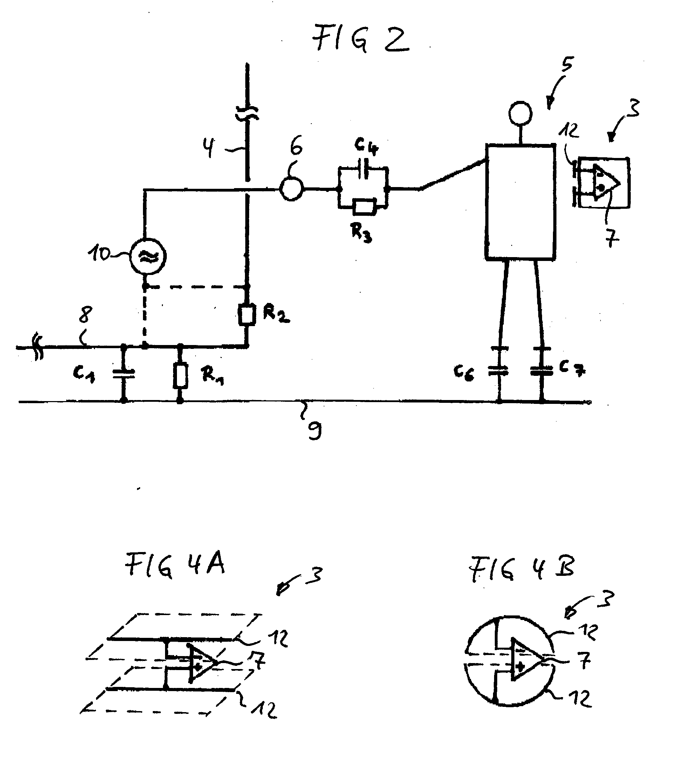

Darüber hinaus darf sich der Codegeber 3 nur in der Nähe des Kraftfahrzeugs befinden, wenn Zugang oder Nutzung begehrt wird. Ob sich der Codegeber 3 in der Nähe befindet wird dadurch festgestellt, dass ein elektromagnetisches Feld im Bereich einer Zugangstür (hier Fahrertür 4) aufgebaut wird, das eine sehr geringe Reichweite hat. Wenn ein Benutzer 5 beispielsweise seine Hand in die Nähe des Türgriffs 6 bringt oder diesen berührt, so wird dieses Feld in den Körper des Benutzers 5 eingekoppelt. Falls der Benutzer 5 seinen Codegeber 3 bei sich trägt, so kann das Feld durch eine Auswerteeinheit 7 (Figur 2) auf dem Codegeber 3 erfasst werden. Mit dem Codegeber 3 wird also gemessen, ob das typische Feld im Körper des Benutzers 5 und seiner unmittelbarer Umgebung vorhanden ist.

Der Sender des Codegebers 3 ist mit der Auswerteeinheit 7 elektrisch verbunden. In einer Ausführungsform ist der Codegeber 3 derart ausgestaltet, dass ein Codesignal nur dann ausgesendet wird, wenn die Auswerteeinheit 7 zuvor das Feld erkannt hat.

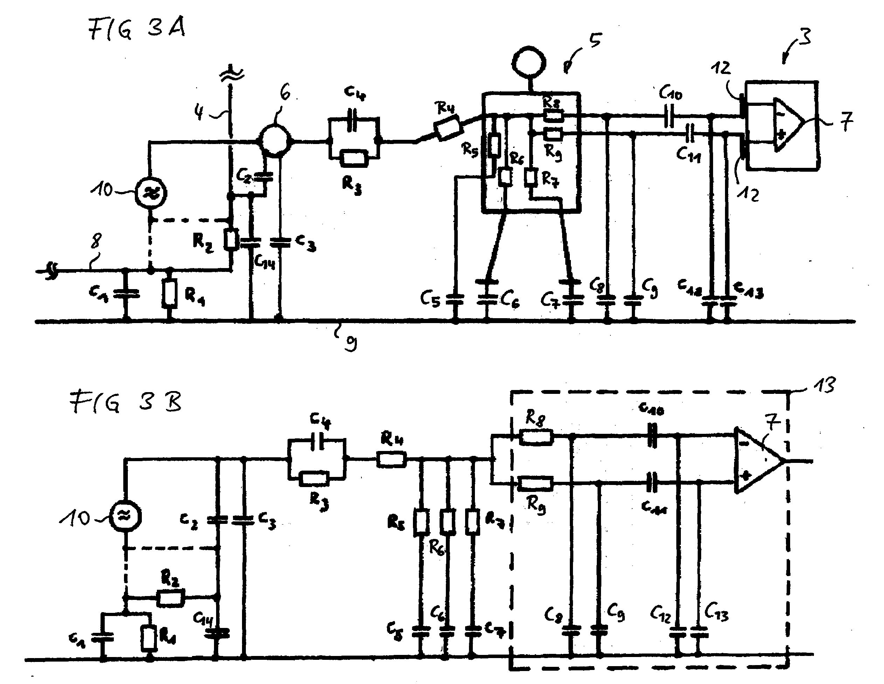

Wie die Erkennung des Feldes funktioniert, wird im folgenden anhand der Figuren 2 sowie 3A und 3B näher erläutert. In Figur 2 ist zunächst das Grundprinzip anhand eines stark vereinfachten Ersatzschaltbildes dargestellt. Das Kraftfahrzeug ist schematisch mit der Fahrertür 4 und dem daran befindlichen Türgriff 6 sowie dem Fahrzeugboden 8 dargestellt. Zwischen Fahrertür 4 und Fahrzeugboden 8 besteht ein Übergangswiderstand, der durch einen Widerstand R₂ dargestellt ist. Zwischen Fahrzeugboden 8 und Erde 9 (Erdboden, Fahrbahn) weist das Kraftfahrzeug eine Kapazität (dargestellt durch einen Kondensator C₁) und ebenfalls einen Übergangswiderstand (dargestellt durch einen Widerstand R₁) auf.

Wird nun zwischen Türgriff 6 und Fahrertür 4 (alternativ zwischen Türgriff 6 und Fahrzeugboden 8) eine Wechselspannungsquelle (im Folgenden als Feldgenerator 10 bezeichnet) gelegt, so wird ein nieder- oder hochfrequentes, elektromagnetisches Feld aufgebaut, welches sich bei entsprechender Ausbildung dieser Anordnung im Wesentlichen im Bereich des Türgriffs 6 besonders ausgeprägt ist.

Nähert sich nun ein Benutzer 5, beispielsweise mit seiner Hand dem Türgriff 6, so findet eine kapazitive Kopplung des Feldes auf den Benutzer 5 statt. Die kapazitive Kopplung wird im Ersatzschaltbild durch einen Kondensator, hier Koppelkondensator C₄, dargestellt. Die eingekoppelte Spannung ist dabei proportional zur Kapazität des Koppelkondensators C₄. Somit wird der Benutzer 5 selbst in das elektromagnetische Feld einbezogen und es baut sich in seiner unmittelbaren Umgebung ein Sekundärfeld auf.

Trägt der Benutzer 5 nun einen mit Sensorelektroden 12 und Auswerteeinheit 7 versehenen Codegeber 3 bei sich, so kann durch Messen der zwischen den beiden Sensorelektroden 12 bestehenden Wechselspannung eine Aussage darüber getroffen werden, ob das im Kraftfahrzeug erzeugte, elektromagnetische Feld auf den Benutzer 5 übergekoppelt wurde, d.h. ob der Benutzer 5 tatsächlich in unmittelbarer Nähe des Kraftfahrzeugs ist.

Die Kopplung zwischen Kraftfahrzeug und Benutzer 5 wird im wesentlichen durch die Ersatzschaltelemente Widerstand R₃ und Koppelkondensator C₄ bestimmt. Der kapazitive Koppelung wirkt bereits dann, wenn sich die Hand des Benutzers 5 dem Türgriff 6 nähert (und somit in das elektromagnetische Feld greift). Die kapazitive Kopplung ist am größten (d.h. Kapazität des Koppelkondensators C₄ hat ihren größten Wert), wenn die Hand den Türgriff 6 umfasst und in unmittelbarem galvanischen Kontakt damit steht. Bei Einsetzen der Berührung zwischen Hand und Griff tritt neben dem Koppelkondensator C₄ auch der Widerstand R₃ (Übergangswiderstand, Hautwiderstand) in Erscheinung, allerdings nur dann, wenn der Benutzer 5 keine Handschuhe trägt (dann ist der Widerstand R₃ so groß, dass er gegen den Blindwiderstand des Kondensators C₄ in der Parallelschaltung vernachlässigt werden kann).

Die geringst mögliche Kopplung ist also dann gegeben, wenn nur der Koppelkondensator C₄ wirksam ist. Dies ist bei einer Dimensionierung der Auswerteeinheit 7 im Codegeber 3 zu berücksichtigen, wenn das Identifikationssystem nach Worstcase-Kriterien ausgelegt werden soll.

Sinngemäße Überlegungen gelten auch hinsichtlich der Kapazitäten (durch Kondensatoren C₆ und C₇ dargestellt) des Benutzers 5 gegen Erde. Im allgemeinen werden diese Kapazitäten keinen großen Schwankungen unterliegen, da die Größe und die Beschaffenheit der Fußbekleidung nur in relativ engen Grenzen variiert. Üblicherweise ist der Übergangswiderstand vom Körper über die Füße zur Erde recht groß, insbesondere dann, wenn der Benutzer 5 mehr oder weniger isolierendes Schuhwerk trägt. Allerdings können parallel zu den Kondensatoren C₆ und C₇ (hier nicht dargestellte) relativ niederohmige Übergangswiderstände wirksam werden, wenn der Benutzer 5 beispielsweise barfuss auf dem Erdboden steht, insbesondere dann, wenn dieser nass ist. Dieser Fall ist für die Auslegung jedoch unkritisch, da man sich dann von der Worst-case-Grenze entfernt.

Die Feldstärke des Sekundärfeldes, das sich um den Körper des Benutzers 5 aufbaut, ist auch abhängig von Kapazität und Übergangswiderstands zwischen Fahrzeugboden 8 und Erdboden 9 (dargestellt durch die Parallelschaltung aus einem Kondensator C₁ und einem Widerstand R₁). Hier gilt sinngemäß das schon für die Kondensatoren C₆ und C₇ Gesagte.

Werden die physikalischen Verhältnisse genauer betrachtet, so kommt man zu einem ausführlicheren Ersatzschaltbild, wie es in Figur 3A dargestellt ist (Elemente gleicher Funktion haben die selben Bezugszeichen wie in Figur 2). Der Benutzer 5 lässt sich durch Widerstände R₄ bis R₉ und einen Kondensator C₅ in einem Ersatzschaltbild ausführlicher darstellen. Die Widerstände R₄ bis R₉ stellen Bahnwiderstände des menschlichen Körpers dar. Sie liegen im kΩ-Bereich und sind damit niederohmig im Vergleich zu den kapazitiven Blindwiderständen der am gesamten Netzwerk des Ersatzschaltbildes beteiligten Kapazitäten der Kondensatoren.

Neben den bereits genannten Kondensatoren C₆ und C₇ ist noch die Kapazität des Kondensators C₅ vorhanden, in welcher alle kapazitiven Kopplungen des Körpers gegen den Erdboden 9 zusammengefasst sind, ausgenommen die Kapazitäten der Kondensatoren C₆ und C₇. Die Kondensatoren C₆ und C₇ stellen die Kopplung des Benutzers 5 über die Füße und Beine zum Erdboden 9 dar. Dabei wird stets die Kapazität des Kondensators C₅ wesentlich kleiner sein als die Kapazitäten der Kondensatoren C₆ und C₇ (dies bedeutet einen großen Übergangswiderstand vom restlichen Körper zur Erde 9) und die Feldstärkeverteilung wenig beeinflusst wird (d.h. nur eine geringe kapazitive Kopplung vom restlichen Körper zur Erde 9).

Wenn sich der Codegeber 3 in der Nähe des Körpers des Benutzers 5 befindet, so wird das Feld auch auf den Codegeber 3 kapazitiv gekoppelt. Dies ist auch dann der Fall, wenn sich der Codegeber 3 nicht direkt am Körper in Hautkontakt befindet, sondern beispielsweise in einer Aktentasche, die neben dem Benutzer 5 steht, da es immer eine Körperpartie mit einem kleinstmöglichen Abstand zum Codegeber 3 gibt. Diese Körperpartie bestimmt dann zwar nicht alleine, aber stark bevorzugt die Feldkopplung zum Codegeber 3. Im Ersatzschaltbild sind Widerstände R₈ und R₉ die Ersatzbahnwiderstände des Körpers zu dieser koppelnden Körperpartie.

Die Widerstände R₈ und R₉ stellen Bestandteile eines Koppelnetzwerkes 13 zwischen Körper und Codegeber 3 dar. Das Koppelnetzwerk 13 besteht auch noch aus den Kapazitäten von Kondensatoren C₈ bis C₁₃. Die Kondensatoren C₈ und C₉ stellen dabei die Kapazitäten von Koppelpunkten zum Erdboden 8 dar. Die Kondensatoren C₁₀ und C₁₁ stellen die eigentlichen Koppelkapazitäten zum Codegeber 3 dar, denen wieder Kapazitäten von Kondensatoren C₁₂ und C₁₃ gegen den Erdboden 9 folgen.

An das Koppelnetzwerk schließt sich ersatzschaltungstechnisch der Codegeber 3 mit seinen Sensorelektroden 12 an, welche die auf den Codegeber 3 kapazitiv eingekoppelte Spannung messen, die aufgrund der auftretenden Feldlinien des Sekundärfeldes gegen Erde entstehen. Es wird allerdings nicht das jeweilige Spannungspotential gegen Erde gemessen, sondern nur die Differenzspannung zwischen den beiden Sensorelektroden 12. Die Differenzspannung wird in einem Differenzverstärker als Auswerteeinheit 7 ausgewertet.

In der Figur 3B ist das komplette Ersatzschaltbild aus Figur 3A wie in der Netzwerktechnik üblich dargestellt. Das Koppelnetzwerk 13 (in der Figur 3B durch einen gestrichelten Rahmen dargestellt) zwischen Benutzer 5 und Codegeber 3 ist entscheidend für die Übertragung des Sekundärfeldes auf den Codegeber 3.

Wegen der vielfältigen Möglichkeiten, einen Codegeber 3 zu tragen und damit entsprechende Sensoren im Bezug auf den Körper zu orientieren, sind die Komponenten (R₈, R₉ und C₈ - C₁₃) dieses Koppelnetzwerks 13 nicht dimensionierbar, sondern sind herrschenden physikalischen Verhältnissen vorgegeben (ebenso sind alle anderen Komponenten des. Ersatzschaltbildes mit Ausnahme des Feldgenerators 10 aufgrund der herrschenden physikalischen Verhältnisse vorgegeben).

Rein theoretisch könnte auch nur ein Spannungspotential gegen Erde auf dem Codegeber 3 gemessen werden. Da das Sekundärfeld ein räumliches, inhomogenes Feld ist, werden drei Raumkomponenten bezüglich der Feldstärke erfasst (auch wenn die eine oder andere Feldkomponente Null sein sollte). Bei dem vorliegenden Ausführungsbeispiel wird ein Feldgradienten (Vektorgradient) ausgewertet, was durch das beschriebene Prinzip der Differenzspannungsmessung realisiert wird. Ein Vektorgradient beinhaltet eine Differenz der Feldkomponenten in allen Raumrichtungen. Somit wird der Einfluss der Orientierung des Codegebers 3 zum Körper auf die Auswertung reduziert.

Ohne besondere Vorkehrungen gibt es jedoch immer noch Orientierungen des Codegebers 3 im Feld, die zwar selten auftreten, bei denen der Feldgradient aber gerade Null ist. Da dann kein Feld erkannt wird, obwohl tatsächlich eines da ist, d.h. die Nähe der berechtigten Person zum Fahrzeug wird nicht erkannt, bliebe das Fahrzeug verriegelt.

Vorteilhafterweise wird dies dadurch vermieden, dass dem Koppelnetzwerk gezielt eine Unsymmetrie geben wird, die bei keiner auftretenden Orientierung aufgehoben werden kann. Dies kann beispielsweise dadurch geschehen, dass man auf dem Codegeber 3 den Kapazitäten der Kondensatoren C₁₂ und C₁₃ schaltungstechnisch Kapazitäten und/oder Widerstände parallel oder in Serie schaltet. Damit wird die dem Differenzverstärker zugeführte Spannung gezielt in Amplitude und/oder Phase so verändert, dass sie sich nie gerade zu Null ergänzen und in ihrer Wirkung damit aufheben können.

In den Figuren 4A und 4B sind mögliche Ausführungsformen des Codegebers 3 dargestellt. Der Codegeber 3 ist so ausgebildet, dass er den Feldgradienten erfassen kann und in einen Codegeber 3 üblicher Bauart (Chipkarten große Karte, Griff eines Kraftfahrzeugschlüssels) eingebaut werden kann. Die Fläche der Sensorelektroden 12 soll möglichst groß sein, damit das Feld sicherer detektiert wird, und andererseits eine kleine Gesamtausdehnung haben, damit die Sensorelektroden 12 in einem kleinen, tragbaren Gehäuse des Codegebers 3 untergebracht werden können.

Dies wird dadurch erreicht, dass die Elektroden flächig ausgebildet werden und der Oberflächenform des Gehäuses des Codegebers 3 angepasst sind. Vorteilhaft ist dabei eine sogenannte Sandwichbauweise zu verwenden. In der Figur 4A ist eine solche plattenförmige Ausführungsform der Sensorelektroden 12 dargestellt, die für eine chipkartenförmige Karte (auch als Smart Card bezeichnet) verwendet werden kann. Die Sensorelektroden 12 sind dabei etwa platten- oder kreisförmig ausgebildet und liegen schichtweise übereinander. Dazwischen ist die Auswerteeinheit 7 mit dem Differenzverstärker angeordnet.

In Figur 4B ist ein Schnitt durch einen Codegeber 3 dargestellt, dessen Elektroden etwa halbkugelförmig oder halbellipsoidförmig ausgebildet sind. Die beiden Elektrodenhälften liegen dabei nahe beieinander und umschließen weitgehend den Differenzverstärker und die Auswerteeinheit 7. Da die Sensorelektroden 12 vollflächig aus leitendem Material hergestellt sind, schirmen sie die Auswerteeinheit 7 vor dem Feld und gegebenenfalls Störstrahlung ab. Es sollen also nur die Sensorelektroden 12 das Feld und die eingekoppelte Spannung messen, Messverfälschungen durch Störeinkopplung in die Leitungen des Differenzverstärkers und der restlichen Auswerteeinheit 7 sollten weitgehend vermieden werden. Dies wird durch die weitgehende Umhüllung der Auswerteeinheit 7 durch die Sensorelektroden 12 bewerkstelligt.

Die äußere Form der Sensorelektroden 12 kann sich nach der Form des Gehäuses des Codegebers 3 richten. Somit kann der Codegeber 3 beispielsweise in einen Schlüsselgriff eines herkömmlichen Fahrzeugschlüssels integriert werden. Wenn die äußere Form der Sensorelektroden 12 an die äußere Form des Codegebers 3 angepasst wird und die Sensorelektroden 12 massiv ausgeführt werden, so wird zudem ein mechanischer Schutz für das Gehäuse des Codegebers 3 erreicht.

Die Sensorelektroden 12 lassen sich als gedruckte Schaltungen, als flexibel gedruckte Schaltungen oder in Aufdampftechnik herstellen. Die Verwendung von galvanisierbaren Kunstoffen mit aufgalvanisierten Elektroden ist eine weitere Möglichkeit, die Sensorelektroden 12 möglichst großflächig auszugestalten und trotzdem eine kleine Bauform für den Codegeber 3 zu erhalten.

Für das in der Figur 3B dargestellte Ersatzschaltbild kann aus der bekannten Fahrzeuggröße, der Größe der Sensorelektroden 12 des Codegebers 3, aus realistisch angenommenen Abständen des Benutzers 5 zum Kraftfahrzeug und des Codegebers 3 zum Benutzer 5 sowie von Abmessungen und aus den bekannten Ersatzkenngrößen des menschlichen Körpers eine Netzwerkdämpfung zwischen Feldgenerator 10 und Sensorelektroden 12 abgeschätzt werden. Legt man übliche Durchschnittswerte zu Grunde, so ergibt sich beispielsweise ein Netzwerkdämpfung zu 80 dB. Speist man am Feldgenerator 10 beispielsweise 50 V ein, wodurch dann ein Feld erzeugt wird, so können - bei 80 dB Netzwerkdämpfung - auf dem Codegeber 3 Differenzspannungen im Bereich von 5 mV gemessen werden, wenn der Benutzer 5 unmittelbar den Türgriff 6 berührt und der Codegeber 3 vom Benutzer 5 getragen wird.

Das Identifikationssystem kann so ausgestaltet sein, dass der Codegeber 3 aufgeweckt wird, wenn überhaupt ein Feld (größer Null) oder ein Feld größer als eine Schwelle und somit eine Differenzspannung größer als ein vorgegebener Schwellwert gemessen wird. Dies ist dann der Fall, wenn der Benutzer 5 unmittelbar den Türgriff 6 betätigt oder in die Mulde zwischen Türgriff 6 und Türblech hineinlangt. So könnte in obigem Beispiel mit 80 dB Netzwerkdämpfung der Schwellwert bei etwa 1 oder 2 mV liegen.

Durch Nähern, Berühren oder Betätigen des Türgriffs 6 kann das Abfragesignal vom Fahrzeug ausgesendet werden und - da der Codegeber 3 infolge des erfassten Feldes aufgeweckt wurde - das Antwortsignal des Codegebers 3 zurück zum Fahrzeug gesendet werden. Solange der Codegeber 3 nicht aufgeweckt ist, sendet er kein Antwortsignal aus.

Das Identifikationssystem kann auch so ausgestaltet sein, dass das Feld erfasst wird, wenn der Benutzer 5 den Türgriff 6 berührt oder sich diesem annähert. Es findet dann ein Frage-Antwort-Dialog zwischen Kraftfahrzeug und Codegeber 3 statt. Dem Antwortsignal wird dabei die gemessene Differenzspannung als Wert hinzugefügt. Im Kraftfahrzeug wird in der Basisstation 1 das Antwortsignal ausgewertet. Nur wenn die gemessene Differenzspannung größer als ein Schwellwert ist, d.h. das gemessene Feld ist größer als eine Vorgabeschwelle, wird das Freigabesignal erzeugt, wenn ferner auch noch die Codeinformation des Antwortsignals mit einer im Kraftfahrzeug erwarteten und gespeicherten Referenzcodeinformation weitgehend übereinstimmt.

Das Abfragesignal kann auch Teil des von dem Feldgenerator 10 erzeugten Feldes sein. In diesem Fall wird dem Feld eine Information aufmoduliert und über den Körper des Benutzers 5 zum Codegeber 3 übertragen. Sobald eine gemittelte Differenzspannung im Codegeber 3 gemessen wird, die über dem vorgegebenen Schwellwert liegt, kann auch die übertragene Information demoduliert werden. Der Codesender sendet dann das Antwortsignal zum Kraftfahrzeug zurück, das dann im Kraftfahrzeug entsprechend ausgewertet wird. Die Reichweite des Abfragesignals darf allerdings nicht zu groß sein, damit keine Überreichweite erzielt wird und weiter entfernte Empfänger dieses nicht empfangen können.

Für die Erfindung ist es allerdings nicht unbedingt erforderlich, dass ein Abfragesignal ausgesendet wird. Es ist dagegen wichtig, dass einerseits ein Antwortsignal mit einer Codeinformation von der Basisstation 1 empfangen wird und andererseits von dem Codegeber 3 ein Feld mit einer Stärke größer als ein Schwellwert erfasst wird, damit der Zugang und die Benutzung freigegeben werden.

Der Codegeber 3 sollte vorteilhafterweise so ausgestaltet sein, dass die Sensorelektroden 12 großflächig ausgebildet sind. Dadurch wird einerseits erreicht, dass räumliche Feldkomponenten erfasst werden - unabhängig von der Orientierung des Codegebers 3. Andererseits sollten die Sensorelektroden 12 die Auswerteeinheit 7 weitgehend umschließen oder abdecken, Sensorelektroden. Denn dann dienen die Sensorelektroden 12 zur Abschirmung des Differenzverstärkers und der daran angeschlossenen Auswerteeinheit 7.

Der Feldgenerator 10 ist vorteilhafter Weise in der Nähe des Türgriffs 6 angeordnet und erzeugt in diesem Bereich ein elektromagnetisches Feld, da der Benutzer 5 bei einem Zugangswunsch den Türgriff 6 betätigt, um die Tür zu öffnen. Es können selbstverständlich auch andere Bereiche des Kraftfahrzeugs mit einem elektromagnetischen Feld beaufschlagt werden, denen sich der Benutzer 5 nähert oder die der Benutzer 5 berührt, um Zugang zu finden.

Das Verfahren zum Erkennen, ob der Benutzer 5 mit seinem Codegeber 3 in der Nähe des Kraftfahrzeugs ist, kann auch zum Lösen der Wegfahrsperre dienen. Hierzu muss der Benutzer 5 im Fahrzeug Platz nehmen. Der Feldgenerator 10 erzeugt dann beispielsweise in der Nähe des Zünd-/Lenkschlosses 14 oder eines Zünd-/Startschalters ein elektromagnetisches Feld. Erst wenn sich der Benutzer 5 dem Zündschalter annähert oder diesen manuell betätigt, wird das Feld in den Körper des Benutzers 5 eingekoppelt. In unmittelbarer Umgebung des Körpers entsteht dann das Sekundärfeld. Das Sekundärfeld und damit das originäre elektromagnetische Feld wird vom Codegeber 3 erkannt, wenn auf ihm eine Differenzspannung größer als der Schwellwert gemessen wird. Dann kann das Antwortsignal ausgesendet und ausgewertet werden. Bei Berechtigung wird ein codiertes Freigabesignal erzeugt, das zum Lösen der Wegfahrsperre und zum Starten des Motors führt.

Der Benutzer 5 muss also tatsächlich in unmittelbarer Nähe des Objekts sein, damit eine Berechtigung durch Freigabe erfolgen kann. Somit bietet das Identifikationssystem Schutz vor Abhören und Wiedergeben des Antwortsignals, da das Antwortsignal alleine nicht zum Nachweis einer Berechtigung dient. Es muss zusätzlich der Benutzer 5 mit seinem Codegeber 3 tatsächlich in unmittelbarer Umgebung des Objekts sein.

Vorteilhafterweise beträgt die Generatorfrequenz des Feldgenerators 10 etwa 125 kHz. Somit entsteht ein elektromagnetisches Feld, dessen Reichweite ohnehin nur maximal 1 bis 2 m beträgt. Je höher die Frequenz ist, desto größer kann auch die Reichweite werden. Bei einer nur sehr geringen Reichweite des elektromagnetischen Feldes ist sichergestellt, dass der Benutzer 5 ganz nahe an das Objekt herantreten muss oder dieses berühren muss, damit das Feld in ihn eingekoppelt wird und er als in der Nähe befindlich erkannt wird. Wie weit der Benutzer 5 maximal vom Objekt entfernt sein darf, kann einerseits durch die Reichweite des Feldes und andererseits durch den Schwellwert eingestellt werden.

Die Sende- und Empfangseinheit kann unmittelbar bei den Antennen 2 oder zentral angeordnet sein. Ebenso kann die Auswerteeinheit 7 der Basisstation 1 in jeder Sende- und Empfangseinheit oder ebenfalls zentral angeordnet sein. Der Feldgenerator 10 zum Erzeugen des Feldes wird von der Basisstation 1 gesteuert und kann in der Nähe des Türgriffs 6 angeordnet sein. Ebenso ist eine zentrale Lage innerhalb des Gehäuses für die Basisstation 1 möglich.

Das Abfragesignal kann beispielsweise niederfrequent bei etwa 125 kHz (NF) ausgesendet werden. Das Antwortsignal kann beispielsweise hochfrequent bei etwa 433 MHz (HF) zurückgesendet werden. Für die Erfindung ist es jedoch unwesentlich, bei welcher Frequenz das Abfragesignal und das Antwortsignal ausgesendet werden. Wenn die Felderzeugung und das Abfragesignal miteinander kombiniert sind, so richtet sich die Trägerfrequenz nach den Erfordernissen der geringen Reichweite des elektromagnetischen Feldes, das in der Nähe des Zugangsortes aufgebaut wird.

Der Feldgenerator 10 kann mit einer Elektrode als "Sender" des Feldes verbunden sein, wobei die Elektrode in der Nähe desjenigen Ortes angeordnet ist, an und um den das Feld erzeugt wird. Das Türblech und der Türgriff 6 selbst können als Elektroden dienen. Wichtig für die Erfindung ist, dass ein elektromagnetisches Feld mit sehr kurzer Reichweite erzeugt wird, in das der Benutzer 5 mit seinem Körper zumindest teilweise gelangen muss.

## Patentansprüche

1. Identifikationssystem zum Nachweis einer Berechtigung für den Zugang zu einem Objekt oder die Benutzung eines Objekts, insbesondere eines Kraftfahrzeugs, mit
- einem mobilen Codegeber (3), der von einem Benutzer (5) getragen wird und der bei Auslösung ein Antwortsignal aussendet, in dem eine für den Codegeber (3) charakteristische Codeinformation enthalten ist, und
- einer objektseitig angeordneten Empfangseinheit (2), die mit einer Auswerteeinheit (1) verbunden ist, in der die in einem empfangenen Antwortsignal enthaltene Codeinformation mit einer Referenzcodeinformation verglichen wird und durch die bei zumindest weitgehender Übereinstimmung ein Freigabesignal zum Steuern eines Sicherheitsaggregats erzeugt wird,
**dadurch gekennzeichnet,**
- **dass** objektseitig eine Felderzeugungseinrichtung (10) vorhanden ist, die ein elektromagnetisches Feld im Objekt oder im unmittelbaren Nahbereich des Objekts erzeugt, und
- **dass** der Codegeber (3) eine Feldmesseinrichtung (7, 12) aufweist, die ein über den Körper des Benutzers (5) in der Nähe des Objekts eingekoppeltes und als Sekundärfeld wieder abgestrahltes Feld erfasst, wenn sich zumindest ein Körperteil des Benutzers (5) in dem von der Felderzeugungseinrichtung (10) erzeugten Feld befindet.

2. Identifikationssystem nach Anspruch 1, **dadurch gekennzeichnet, dass** das Aussenden des Antwortsignals erst dann ausgelöst wird, wenn die von der Feldmesseinrichtung (7, 12) gemessene Feldstärke des Feldes über einem Schwellwert liegt.

3. Identifikationssystem nach Anspruch 1, **dadurch gekennzeichnet, dass** das objektseitig erzeugte Feld ein Wechselfeld mit einer Schwingungsfrequenz von etwa 125 kHz ist.

4. Identifikationssystem nach Anspruch 1, **dadurch gekennzeichnet, dass** objektseitig ein Modulator (1) angeordnet ist, der dem Wechselfeld eine codierte Information aufmoduliert.

5. Tragbarer Codegeber für ein Identifikationssystem zum Nachweis einer Berechtigung für den Zugang zu einem Objekt oder die Benutzung eines Objekts, insbesondere eines Kraftfahrzeugs, **dadurch gekennzeichnet, dass** der Codegeber (3) flächig ausgebildete Elektroden (12) einer Feldmesseinrichtung (7, 12) aufweist, wobei die Elektroden derart ausgestaltet sind, dass sie die Feldmesseinrichtung (7, 12) weitgehend umgeben.

6. Codegeber 3 nach Anspruch 5, **dadurch gekennzeichnet, dass** die Elektroden (12) schichtweise übereinanderliegen mit dazwischenliegender Feldmesseinrichtung (7) ausgebildet sind.

7. Codegeber 3 nach Anspruch 5, **dadurch gekennzeichnet, dass** die Feldmesseinrichtung (17, 2) auf einer chipkartenähnlichen Karte oder einem Schlüsselgriff angeordnet ist.

8. Codegeber 3 nach Anspruch 5, **dadurch gekennzeichnet, dass** die Elektroden (12) etwa halbkugelförmig, etwa halbellipsoidförmig, etwa plattenförmig oder etwa kreisförmig ausgebildet sind.

9. Identifikationssystem zum Nachweis einer Berechtigung für den Zugang zu einem Objekt oder die Benutzung eines Objekts, insbesondere eines Kraftfahrzeugs, mit
- einem mobilen Codegeber (3), der von einem Benutzer (5) getragen wird und der bei Auslösung ein Antwortsignal aussendet, in dem eine für den Codegeber (3) charakteristische Codeinformation enthalten ist, und
- einer objektseitig angeordneten Empfangseinheit (2), die mit einer Auswerteeinheit (1) verbunden ist, in der die in einem empfangenen Antwortsignal enthaltene Codeinformation mit einer Referenzcodeinformation verglichen wird und durch die bei zumindest weitgehender Übereinstimmung ein Freigabesignal zum Steuern eines Sicherheitsaggregats erzeugt wird,
**dadurch gekennzeichnet,**
**dass** eine objektseitig angeordnete Felderzeugungseinrichtung (10) ein elektromagnetische Feld mit einer derartigen kurzen Reichweite erzeugt, dass ein entfernt davon von einem Benutzer (5) getragener Codegeber (3) nur dann ein Feld mit einer Feldmesseinrichtung (7, 12) erfasst, wenn sich der Benutzer (5) mit einem Teil seines Körpers in dem erzeugten Feld befindet und dieses in den Körper des Benutzers (5) eingekoppelt wird.
